(19)

**Europäisches Patentamt**
**European Patent Office**
**Office européen des brevets**

(11) **EP 4 122 969 A1**

(12) **EUROPEAN PATENT APPLICATION**

(43) Date of publication:
**25.01.2023 Bulletin 2023/04**

(21) Application number: **21306031.2**

(22) Date of filing: **23.07.2021**

(51) International Patent Classification (IPC):
**C08G 18/42** (2006.01)     **C08G 18/62** (2006.01)
**C08L 75/04** (2006.01)     **C08L 75/06** (2006.01)
**C09D 175/04** (2006.01)     **C09D 175/06** (2006.01)

(52) Cooperative Patent Classification (CPC):
**C08L 75/06; C08G 18/4238; C08G 18/6279;**
**C08L 75/04; C09D 175/04; C09D 175/06**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
• **MEHEUST, Hélène**
  **Serquigny (FR)**
• **FUKUYAMA, Takehiro**
  **Kyoto (JP)**

(74) Representative: **Bandpay & Greuter**
**30, rue Notre-Dame des Victoires**
**75002 Paris (FR)**

(54) **POWDER COATING COMPOSITION**

(57)    The present invention relates to a powder coating composition comprising at least one fluoropolymer resin, at least one polyester resin, and an isocyanate crosslinking agent; wherein the molar ratio of isocyanate groups of the isocyanate crosslinking agent to hydroxyl groups of the polyester resin in the composition is from 2.5 to 5.

The present invention further relates to a method for producing said powder coating composition, to the use of said powder coating composition for architectural powder coating, and to a powder coating obtained by applying and curing said powder coating composition.

EP 4 122 969 A1

**Description**

**Technical field**

The present invention relates to new powder coating compositions based on fluoropolymer, polyester resins and isocyanate crosslinking agents, and to methods for producing such compositions.

**Technical background**

Due to increasing concerns in environmental pollution, the coating industry is shifting towards no volatile organic compounds (VOC).

Powder coating is an environmentally promising technology since it does not contain any VOC and does not require exhaust treatment or wastewater treatment. In addition, excess material can be reclaimed.

Powder coatings based on acrylic, polyester, and epoxy resins are historically used but they exhibit poor weathering properties.

On the other hand, coatings based on fluoropolymer are weatherable. However, fluoropolymers are difficult to grind to powder and coating materials comprising fluorinated resins generally contains water or solvents and are not in the form of powder.

To face the above mentioned issues, attempts to develop powder coatings containing fluoropolymer and another resin have been made.

Document EP 3670570 relates to a resin composition comprising a blend of: a) 10 to 90% by weight of at least one fluoropolymer resin and b) 90 to 10% by weight of at least one semi-crystalline polyester resin, based on the total weight of the fluoropolymer resin and semi-crystalline polymer resin.

Document EP 2868724 relates to a powder coating composition comprising a fluorinated resin, a polyester polymer, a curing agent, and an ultraviolet absorber, wherein the polyester polymer is a polyester polymer comprising units derived from a C8-15 aromatic polybasic carboxylic acid compound and units derived from a C2-10 polyhydric alcohol compound.

Document WO 2016/002725 relates to a composition for powder coating material comprising polyvinylidene fluoride and at least one resin selected from a group consisting of an acrylic resin, a polyester resin and an epoxy resin, wherein the content of the polyvinylidene fluoride is 30 to 90 parts by mass relative to the total of 100 parts by mass of the polyvinylidene fluoride and the resin.

Document JP 5419828 relates to a powder coating composition obtained by melting and kneading a mixture containing a fluororesin, a polyester resin, a pigment, a crosslinking resin particle, an epoxy resin and an isocyanate compound, and cooling and then pulverizing the mixture.

However, such powder compositions tend to lead to coatings having reduced weathering properties notably after long term use which thus lead to coatings having insufficient adhesion properties. In fact, a common method to assess such weathering properties includes immersing a coated panel in boiling water for a certain period of time.

There is thus a need for a powder coating composition which makes it possible to produce coatings with improved weathering and adhesion properties, notably after long term use.

**Summary of the invention**

It is a first object of the invention to provide a powder coating composition comprising:

a) at least one fluoropolymer resin;
b) at least one polyester resin; and
c) an isocyanate crosslinking agent;

wherein the molar ratio of isocyanate groups of the isocyanate crosslinking agent to hydroxyl groups of the polyester resin in the composition is from 2.5 to 5.

According to some embodiments, the polyester resin is a semi-crystalline polyester resin preferably having a linear aliphatic or/and cycloaliphatic structure.

According to some embodiments, the molar ratio of isocyanate groups of the isocyanate crosslinking agent to hydroxyl groups of the polyester resin in the composition is from 2.5 to 4.8, and preferably from 2.8 to 4.5.

According to some embodiments, the isocyanate crosslinking agent is chosen from a blocked isocyanate crosslinking agent and a non-blocked isocyanate crosslinking agent.

According to some embodiments, the isocyanate crosslinking agent is present at an amount from 1 to 20 % relative to the total weight of the resin components in the powder coating composition, and/or wherein the fluoropolymer resin is present at an amount from 5 to 90 % relative to the total weight of the resin components in the powder coating composition, and/or wherein the polyester resin is present at an amount from 5 to 90 % relative to the total weight of the resin components in the powder coating composition.

According to some embodiments, the polyester resin is a semi-crystalline polyester resin and wherein the semi-crystalline polyester resin comprises, and preferably consists of, units derived from:

- at least a poly-carboxylic acid chosen among a linear aliphatic dicarboxylic acid and/or a cycloaliphatic dicarboxylic acid, and
- at least a polyol chosen among a linear aliphatic diol and/or a cycloaliphatic diol,

wherein the poly-carboxylic acid is preferably chosen among a linear aliphatic $C_4$-$C_8$ dicarboxylic acid, preferably a linear aliphatic $C_4$-$C_6$ dicarboxylic acid, and/or a cycloaliphatic dicarboxylic acid, and is more preferably chosen among adipic acid, succinic acid, 1,5-pentanedioic acid, 1,4-cyclohexanedicarboxylic acid and a combination thereof; and the polyol is preferably chosen among a linear aliphatic $C_2$-$C_8$ diol, preferably a linear aliphatic $C_2$-$C_6$ diol, more preferably a linear aliphatic $C_4$-$C_6$ diol, and/or a cycloaliphatic diol, and is more preferably chosen among 1,6-hexanediol, 1,4-butanediol, 1,4-cyclohexanedimethanol and a combination thereof.

According to some embodiments, the polyester resin is a semi-crystalline polyester resin and wherein the melting temperature of the semi-crystalline polyester resin is from 75 to 150°C, preferably from 90 to 130°C.

According to some embodiments, the fluoropolymer resin is chosen among polyvinylidene fluoride homopolymers and poly(vinylidene fluoride-hexafluoropropylene) copolymers.

According to some embodiments, the isocyanate crosslinking agent is chosen from tolylene diisocyanate, 4,4'-diphenylmethane isocyanate, xylene diisocyanate, hexamethylene diisocyanate, 4,4'-methylenebis(cyclohexyl isocyanate), methyl cyclohexane diisocyanate, bis(isocyanate methyl) cyclohexane isophorone diisocyanate, dimer acid diisocyanate, lysine isocyanate, 1,5-naphthalene diisocyanate, and their combinations.

According to some embodiments, the powder coating composition has a particle volume median diameter Dv50 of from 10 to 250 $\mu$m, preferably from 30 to 150 $\mu$m, as determined by laser diffraction analysis.

According to some embodiments, the powder coating composition further comprises other additives chosen among pigments, flow agents, degassing agents, waxes and combinations thereof.

The invention also relates to a method for producing the above powder coating composition, comprising mixing a blend comprising the fluoropolymer resin and the polyester resin with the isocyanate crosslinking agent.

According to some embodiments, the mixing is carried out by blending in a blender, preferably in an extruder, the blend comprising the fluoropolymer resin and the polyester resin with the isocyanate crosslinking agent to form a melt blend, and wherein the method optionally comprises converting the melt blend into flakes, into pellets, into crumbs or into a powder after cooling.

The invention also relates to the use of the above powder coating composition, for architectural powder coating.

The invention also relates to a powder coating obtained by applying and curing the above powder coating composition.

The present invention allows to address the above mentioned need. In particular the invention provides a powder coating composition which makes it possible to produce coatings with improved weathering and adhesion properties, notably after long term use.

This is achieved by the use of a composition comprising a fluoropolymer resin, a polyester resin and an isocyanate crosslinker wherein the molar ratio of blocked or non-blocked isocyanate groups (NCO) of the isocyanate crosslinking agent to hydroxyl groups (OH) of the polyester resin in the composition is from 2.5 to 5. More particularly, the specific NCO to OH molar ratio makes it possible to improve the weathering properties of the produced coatings, in other words improve the adhesion of the coating after long time weathering. In fact, a composition presenting a lower NCO to OH molar ratio (for example around 1) presents deteriorated weathering properties than the weathering properties of the composition according to the present invention.

**Detailed description**

The invention will now be described in more detail without limitation in the following description.

Unless otherwise mentioned, the percentages in the present application are percentages by weight.

Powder coating composition

In a first aspect, the invention relates to a powder coating composition comprising:

a) at least one fluoropolymer resin,

b) at least one polyester resin, and

c) an isocyanate crosslinking agent wherein the molar ratio of isocyanate groups of the isocyanate crosslinking agent to hydroxyl groups of the polyester resin in the composition is from 2.5 to 5.

The polyester resin may be a semi-crystalline or an amorphous polyester resin.

By *"semi-crystalline"* is meant non-amorphous. The phase changes establishing whether a resin is semi-crystalline or amorphous can be detected by Differential Scanning Calorimetry (DSC), as described in the Encyclopedia of Polymer Science and Engineering, Volume 4, pages 482-519, 1986 (Wiley Interscience). A resin is considered to be amorphous if it does not show a discernible crystallization or melting peak. A resin is considered to be semi-crystalline if it shows at least one crystallization or melting peak. In general, when different melting peaks are observed in a DSC curve, these multiple peaks are specified by a melting range. It should be noted that the term *"semi-crystalline"* as defined herein encompasses strictly semi-crystalline polymers (*i.e.* polymers showing a discernible glass transition temperature Tg) as well as crystalline polymers (*i.e.* polymers showing no discernible glass transition temperature Tg).

Semi-crystalline (or crystalline) polyester resins differ from conventional amorphous polyester resins as used in powder coatings in that they have a heterogeneous morphology (*i.e.* they contain a mixture of phases), are usually opaque and white in color at room temperature and, in addition to their relatively low melt viscosities, are much more insoluble in common organic solvents, for example xylene, white spirit and ketones, than their amorphous counterparts. Semi-crystalline polyester resins generally have a high degree of structural regularity (*i.e.* chemical, geometrical and/or spatial symmetry).

The powder coating composition of the invention may comprise from:

a) 5 to 90 % by weight of the at least one fluoropolymer resin,

b) 5 to 90 % by weight of the at least one polyester resin, and

c) 1 to 20 % by weight of the isocyanate crosslinking agent,

based on the total weight of the resin components in the powder coating composition.

The powder coating composition according to the invention is a curable (or crosslinkable) powder coating composition.

Preferably, the fluoropolymer resin is present in the powder coating composition in an amount of 10 to 90 % by weight, more preferably from 40 to 90 % by weight, more preferably from 60 to 90 % by weight, more preferably from 70 to 80 % by weight of fluoropolymer resin, based on the total weight of the resin components in the powder coating composition.

Preferably, the polyester resin is present in the powder coating composition in an amount of 10 to 90 % by weight, more preferably of 10 to 60 % by weight, more preferably from 10 to 40 % by weight, more preferably from 20 to 30 % by weight of polyester resin based on the total weight of the resin components in the powder coating composition.

As mentioned above, the isocyanate crosslinking agent is present at an amount at which the molar ratio of isocyanate groups of the isocyanate crosslinking agent to hydroxyl groups of the polyester resin in the composition is from 2.5 to 5. According to preferred embodiments, the isocyanate crosslinking agent is present at an amount at which the molar ratio of isocyanate groups of the isocyanate crosslinking agent to hydroxyl groups of the polyester resin in the composition is from 2.5 to 4.8, and preferably from 2.5 to 4.5. The molar ratio can be calculated by using the following equation:

$$\text{Molar ratio} = \frac{561}{OH\ Value\ (mgKOH/g)} * \frac{NCO\ content\ (wt\%) * Crosslinker\ amount\ (g)}{42 * Semi-crystalline\ polyester\ amount\ (g)}$$

wherein the OH value is that of the polyester and NCO content is that of the crosslinker.

The isocyanate cross-linking agent may be present in an amount of from 3 to 17% by weight, preferably of from 6 to 17 % by weight, based on the total weight of the resin components in the powder coating composition.

According to preferred embodiments, in the powder coating composition of the invention, the fluoropolymer resin, the polyester resin and the isocyanate crosslinking agent can be mixed by melting at least one of the resin components. In this case, the powder coating composition of the invention comprises particles which comprise fluoropolymer resin, polyester resin and an isocyanate crosslinking agent.

According to other embodiments, the powder coating composition of the invention can be a dry blend, in other words the powder coating composition can be a mixture of a powder of fluoropolymer resin with a powder of a polyester resin and a powder of an isocyanate crosslinking agent.

Preferably, the particles of the powder coating composition have a volume median diameter Dv50 of from 10 to 250 μm, preferably from 30 to 150 μm, for example from 10 to 30 μm, or from 30 to 50 μm, or from 50 to 100 μm, or

from 100 to 150 μm, or from 150 to 200 μm, or from 200 to 250 μm.

The Dv50 is the particle size at the 50th percentile (in volume) of the cumulative size distribution of particles. This parameter may be determined by laser diffraction analysis.

In some embodiments, the powder coating composition essentially consists of, or consists of, the at least one fluoropolymer resin the at least one polyester resin and the isocyanate crosslinking agent.

Polyester resin

As mentioned above, the polyester resin may be a semi-crystalline or an amorphous polyester resin.

According to preferred embodiments, the polyester resin is a semi-crystallin resin. In this case, the semi-crystalline polyester resin is preferably a linear semi-crystalline polyester resin.

The term *"amorphous polyester"* broadly defines polyesters which show no, or trace crystallization or melting point as determined by differential scanning thermometry (DSC).

The term *"semi-crystalline polyester"* broadly defines polyesters with a discernable crystallization or melting point by DSC.

The polyester resin may be based on the polycondensation reaction of (cyclo)aliphatic and/or aromatic polyols with (cyclo)aliphatic and/or aromatic polycarboxylic acids or anhydrides, esters or acid chlorides based on these acids. Examples of suitable polyols include 1,2-ethanediol, 1,3-propanediol, 1,4-butanediol, diethylene glycol, 1,6-hexanediol, neopentyl glycol, 1,10-decanediol, 1-4-cyclohexanedimethanol, trimethylolpropane, 2-methylpropan-1,3-diol, hydrogenated bisphenol A (or 2,2-(dicyclohexanol) propane), 2,2,4-trimethyl-1,3-pentanediol, 2-n-butyl-2-ethyl-1,3-propanediol and 3-hydroxy-2,2-dimethylpropyl 3-hydroxy-2,2-dimethylpropanoate (CA, Reg. No.=115-20-4). Suitable poly-carboxylic acids which may be used include linear, (cyclo)aliphatic poly-carboxylic acids with 2 to 22 methylene groups and/or aromatic poly-carboxylic acids, and in particular include succinic acid, adipic acid, azelaic acid, sebacic acid, 1,12-dodecanedioic acid, terephthalic acid, isophthalic acid, trimesic acid, tetrahydrophthalic acid, hexahydrophthalic acid, 1,4-cyclohexanedicarboxylic acid, trimellitic acid and naphthalene dicarboxylic acid.

However, preferably, the polyester resin is a semi-crystalline polyester resin more preferably having a linear aliphatic and/or cycloaliphatic structure. In particular, such semi-crystalline polyester resin may comprise units derived from:

- at least a poly-carboxylic acid chosen among a linear aliphatic dicarboxylic acid and/or a cycloaliphatic dicarboxylic acid, and
- at least a polyol chosen among a linear aliphatic diol and/or a cycloaliphatic diol.

Preferably, such semi-crystalline polyester resin does not comprise any unit derived from an aromatic poly-carboxylic acid (such as from an aromatic dicarboxylic acid) and/or from an aromatic polyol.

In addition, such semi-crystalline polyester resin may essentially consist, or consist, of units derived from:

- at least a poly-carboxylic acid chosen among a linear aliphatic dicarboxylic acid and/or a cycloaliphatic dicarboxylic acid, and
- at least a polyol chosen among a linear aliphatic diol and/or a cycloaliphatic diol.

Advantageously, the linear aliphatic dicarboxylic acid is a linear aliphatic $C_4$-$C_8$ dicarboxylic acid, and more preferably a linear aliphatic $C_4$-$C_6$ dicarboxylic acid. For example, it may be a linear aliphatic $C_4$ dicarboxylic acid, a linear aliphatic $C_5$ dicarboxylic acid, a linear aliphatic $C_6$ dicarboxylic acid, a linear aliphatic $C_7$ dicarboxylic acid and/or a linear aliphatic $C_8$ dicarboxylic acid.

Advantageously, the cycloaliphatic dicarboxylic acid is a $C_6$-$C_8$ cycloaliphatic dicarboxylic acid.

Preferably, the poly-carboxylic acid is chosen among adipic acid, succinic acid, 1,5-pentanedioic acid, 1,4-cyclohexanedicarboxylic acid and a combination thereof.

Preferably, the linear aliphatic diol is a linear aliphatic $C_2$-$C_8$ diol, more preferably a linear aliphatic $C_2$-$C_6$ diol and even more preferably a linear aliphatic $C_4$-$C_6$ diol. The linear aliphatic diol may be a linear aliphatic $C_2$ diol, a linear aliphatic $C_3$ diol, a linear aliphatic $C_4$ diol, a linear aliphatic $C_5$ diol, a linear aliphatic $C_6$ diol, a linear aliphatic $C_7$ diol and/or a linear aliphatic $C_8$ diol.

Advantageously, the cycloaliphatic diol may be a $C_6$-$C_8$ cycloaliphatic diol.

In preferred embodiments, the polyol is chosen among 1,6-hexanediol, 1,4-butanediol, 1,4-cyclohexanedimethanol and a combination thereof.

In particularly preferred embodiments, the semi-crystalline polyester resin having a linear aliphatic and/or cycloaliphatic structure is chosen among polybutylene succinate, polybutylene 1,4 cyclohexane dicarboxylate and 1,4 cyclohexane dimethanol pentadionate.

For the formation of a polyester resin with significant crystallinity, it is preferred but not essential that the poly-carboxylic acids and polyols used in the polycondensation reaction contain an even number of carbon atoms. The use of aliphatic cyclic reagents symmetrically substituted, for example 1,4-cyclohexanedicarboxylic acid or 1,4-cyclohexanedimethanol, tends to promote crystallinity. However, such reagents may tend to produce semi-crystalline polyester resins having a melting temperature higher than the usual curing temperature of thermosetting polyester powder coatings; it may be preferred to use them in conjunction with a diol of the formula $HO(CH_2)_nOH$ or a dicarboxylic acid of the formula $HOOC(CH_2)_nCOOH$ where n is an even number, preferably from 2 to 8, for example 4 or 6, to produce a semi-crystalline polyester resin having a lower melting temperature.

This does not, however, preclude the use in the polycondensation reaction of monomeric poly-carboxylic acids or polyols containing an odd number of carbon atoms or the use of certain experimental techniques known to promote crystallinity in polymers, *e.g.* maintaining the polyester product at a temperature mid-way between its glass transition temperature (Tg) and its melting temperature (Tm) for a period of time or conducting the synthesis in (or treating the final polyester resin with) a high boiling organic solvent such as 1,3-dichlorobenzene or diphenylether so that the polyester is maintained above its Tm for a period of time before being allowed to cool to ambient temperature. These and other techniques for promoting crystallinity in carboxylic acid group-containing polyester resins may be used alone or in combination.

The polyester resin may be a mixture of two or more of the abovementioned resins.

In case the polyester resin is an amorphous polyester, it may comprise units such as terephthalic acid, neopentyl glycol and trimethylolpropane. Specific examples of useful commercially available amorphous polyesters are Cargill 3000®resin, Rucote 105®, REAFREE® 17014 and REAFREE® 5709.

In case the polyester resin is a semi-crystalline polyester resin, it may have a melting temperature of from 75°C to 150°C, preferably of from 90 to 130°C, for example it may have a melting temperature of from 75 to 90°C, or from 90 to 100°C, or from 100 to 110°C, or from 110 to 120°C, or from 120 to 130°C, or from 130°C to 150°C. The melting temperature may be measured according to ISO 11357-3:1999 Plastics - Differential scanning calorimetry (DSC) Part 3 but at a heating rate of 10°C/min.

Specific examples of commercially available semi-crystalline polyester resins are UVECOAT® 9010, UV1605, UV2335, and Matflex AHA90.

The glass transition temperature Tg of the polyester resin is preferably lower than 100°C, and may be from -20 to 50°C, more preferably from -15 to 40°C. In some embodiments, the polyester resin has a glass transition temperature of from -20 to -10°C, or from -10 to 0°C, or from 0 to 10°C, or from 10 to 20°C, or from 20 to 30°C, or from 30 to 40°C, or from 40 to 50°C, or from 50 to 55°C. The glass transition temperature may be measured according to ISO 11357-2 Plastics - Differential scanning calorimetry (DSC) Part 2 but at a heating rate of 10°C/min. Examined by DSC, the semi-crystalline polyester resin may exhibit two glass transitions, one of which is attributable to a freely mobile, amorphous region in the polyester resin and the other to an amorphous region where motion is constrained by adjacent crystallites. In those cases, both Tg values lie within the abovementioned temperature ranges.

The polyester resin preferably has a hydroxyl value of at least 15 mg KOH/g. This enables to ensure that it is able to be adequately cured. Most preferably, the polyester resin has a hydroxyl value of at least 20 mg KOH/g. It preferably has a hydroxyl value of not more than 70 mg KOH/g, most preferably not more than 40 mg KOH/g. In particular, the hydroxyl value may be from 15 to 20 mg KOH/g, or from 20 to 25 mg KOH/g, or from 25 to 30 mg KOH/g, or from 30 to 35 mg KOH/g, or from 35 to 40 mg KOH/g, or from 40 to 50 mg KOH/g, or from 50 to 60 mg KOH/g, or from 60 to 70 mg KOH/g. The hydroxyl value may be measured according to DIN 53240-2.

Preferably also, the polyester resin has an acid value of no more than 10 mg KOH/g, more especially no more than 5 mg KOH/g. The acid value may be measured according to ASTM D-1639-90.

A polyester resin with such a hydroxyl value and an acid value may be prepared by a polycondensation reaction of polyols with poly-carboxylic acids (or anhydrides, esters, or acid chlorides based on these acids) using an excess of alcohol over acid.

In alternative and less preferred embodiments, the polyester resin has an acid value of at least 15 mg KOH/g per gram, most preferably of at least 20 mg KOH/g. It may have an acid value of not more than 70 mg KOH/g, most preferably not more than 40 mg KOH/g. For example, it may have an acid value of from 15 to 20 mg KOH/g, or from 20 to 30 mg KOH/g, or from 30 to 40 mg KOH/g, or from 40 to 55 mg KOH/g, or from 55 to 70 mg KOH/g. It may have a hydroxyl value of no more than 10 mg KOH/g, more especially no more than 5 mg KOH/g. A polyester resin with such a hydroxyl value and an acid value may be prepared by a polycondensation reaction of polyols with poly-carboxylic acids (or anhydrides, esters, or acid chlorides based on these acids) using an excess of acid over alcohol.

The number average molecular weight Mn of the polyester resin is preferably at least 1500. With such a number average molecular weight, the polyester resin can contribute to the toughness of the coating. Number average molecular weights Mn of at least 2000 are particularly preferred.

The number average molecular weight Mn of the polyester resin is preferably not more than 15000, most preferably not more than 5000. Number average molecular weights of up to 4000 should especially be mentioned. The number average molecular weight Mn may be measured by Gel Permeation Chromatography (GPC).

In some embodiments, the number average molecular weight Mn of the polyester resin is from 1500 to 2000, or from 2000 to 3000, or from 3000 to 4000, or from 4000 to 5000, or from 5000 to 6000, or from 6000 to 7000, or from 7000 to 8000, or from 8000 to 9000, or from 9000 to 10000, or from 10000 to 11000, or from 11000 to 12000, or from 12000 to 13000, or from 13000 to 14000, or from 14000 to 15000.

In case the polyester resin is a semi-crystalline polyester resin, it may have a heat of fusion of from 20 to 100 J/g, preferably from 25 to 90 J/g. The heat of fusion may be determined by DSC according to ISO 11357-3:1999 but at a heating rate of 10°C/min. In examples, the heat of fusion may be of from 20 to 25 J/g, or from 25 to 30 J/g, or from 30 to 40 J/g, or from 40 to 50 J/g, or from 50 to 60 J/g, or from 60 to 70 J/g, or from 70 to 80 J/g, or from 80 to 90 J/g.

In case the polyester resin is an amorphous polyester resin, it may have a heat of fusion of from 0 to 20 J/g, preferably from 0 to 5 J/g.

The polyester resin may have melt viscosity of from 0.005 to 10 Pa.s at 165°C and at a shear rate of 30 $s^{-1}$. In particular, the melt viscosity may be from 0.005 to 0.05 Pa.s, or from 0.05 to 0.5 Pa.s, or from 0.5 to 1 Pa.s, or from 1 to 2 Pa.s, or from 2 to 3 Pa.s, or from 3 to 4 Pa.s, or from 4 to 6 Pa.s, or from 6 to 8 Pa.s, or from 8 to 10 Pa.s at 165°C and at a shear rate of 30 $s^{-1}$. The melt viscosity may be measured according to ASTM D-4287-00, at 165°C.

The polyester resin may be prepared as described in DE 10 2006 057837.

Fluoropolymer resin

The fluoropolymer resin may comprise within its backbone at least one unit from a monomer chosen among vinyl monomers containing at least one fluorine atom, vinyl monomers comprising at least one fluoroalkyl group and vinyl monomers comprising at least one fluoroalkoxy group. As an example, this monomer can be vinyl fluoride; vinylidene fluoride; trifluoroethylene (VF3); chlorotrifluoroethylene (CTFE); 1,2-difluoroethylene; tetrafluoroethylene (TFE); hexafluoropropylene (HFP); a perfluoro(alkyl vinyl) ether such as perfluoro(methyl vinyl)ether (PMVE), perfluoro(ethyl vinyl) ether (PEVE) or perfluoro(propyl vinyl) ether (PPVE); perfluoro(1,3-dioxole); perfluoro(2,2-diméthyl-1,3-dioxole) (PDD); the product of formula $CF_2=CFOCF_2CF(CF_3)OCF_2CF_2X$ in which X is $SO_2F$, $CO_2H$, $CH_2OH$, $CH_2OCN$ or $CH_2OPO_3H$; the product of formula $CF_2=CFOCF_2CF_2SO_2F$; the product of formula $F(CF_2)_nCH_2OCF=CF_2$ in which n is 1, 2, 3, 4 or 5; the product of formula $R_1CH_2OCF=CF_2$ in which $R_1$ is hydrogen or $F(CF_2)_m$ and m is 1, 2, 3 or 4; the product of formula $R_2OCF=CH_2$ in which $R_2$ is $F(CF_2)_p$ and p is 1, 2, 3 or 4; perfluorobutyl ethylene (PFBE); 3,3,3-trifluoropropene or 2-trifluoromethyl-3,3,3-trifluoro-1-propene.

The fluoropolymer resin can be a homopolymer or a copolymer. It may also comprise units from non-fluorinated monomers like ethylene.

Advantageously, the fluoropolymer resin is a polyvinylidene fluoride resin.

The polyvinylidene fluoride resin is preferably a homopolymer.

In other embodiments, the polyvinylidene fluoride resin may be a copolymer comprising vinylidene fluoride units and units from one or more other monomers. Examples of other monomers are vinyl fluoride; trifluoroethylene; chlorotrifluoroethylene (CTFE); 1,2-difluoroethylene, tetrafluoroethylene (TFE); hexafluoropropylene (HFP); perfluoro(alkyl vinyl)ethers such as perfluoro(methyl vinyl)ether (PMVE), perfluoro(ethyl vinyl)ether (PEVE) or perfluoro(propyl vinyl)ether (PPVE); perfluoro(1,3-dioxole); perfluoro(2,2-dimethyl-1,3-dioxole) (PDD); the product of formula $CF_2=CFOCF_2CF(CF_3)OCF_2CF_2X$ in which X is $SO_2F$, $CO_2H$, $CH_2OH$, $CH_2OCN$ or $CH_2OPO_3H$; the product of formula $CF_2=CFOCF_2CF_2SO_2F$; the product of formula $F(CF_2)_nCH_2OCF=CF_2$ in which n is 1, 2, 3, 4 or 5; the product of formula $R'CH_2OCF=CF_2$ in which R' is hydrogen or $F(CF_2)_z$ and z is 1, 2, 3 or 4; the product of formula $R"OCF=CH_2$ in which R" is $F(CF_2)_z$ and z is 1, 2, 3 or 4; perfluorobutylethylene (PFBE); 3,3,3-trifluoropropene or 2-trifluoromethyl-3,3,3-trifluoro-1-propene. Hexafluoropropylene is preferred. The polyvinylidene fluoride copolymer may also comprise units from ethylene monomers. Preferably, when the polyvinylidene fluoride resin is a copolymer, it contains at least 50% by weight, more preferably at least 60% by weight, even more preferably at least 70% by weight, even more preferably at least 80% by weight, of vinylidene fluoride units.

The fluoropolymer resin may be a mixture of two or more of the abovementioned resins.

The fluoropolymer may have a viscosity measured by capillary rheometry according to ASTMD3835 at a shear rate of 100 $s^{-1}$ and at 230°C lower than 3000 Pa.s and more preferably lower than 1500 Pa.s.

Advantageously, the fluoropolymer resin has a melting temperature higher than that of the polyester resin or the glass transition of the amorphous polyester.

Isocyanate crosslinking agent

By *"isocyanate crosslinking agent"* is meant a crosslinking agent comprising at least one isocyanate (NCO) group, and preferably more than one isocyanate (NCO) groups. The isocyanate crosslinking agent may include blocked and/or non-blocked isocyanate groups. Thus, when the ratios of each component are mentioned and measured, by isocyanate groups is meant the total of blocked and/or non-blocked isocyanate groups.

The isocyanate crosslinking agent reacts with the fluoropolymer resin and the polyester resin and makes it possible to cure (crosslink) the composition at a specific temperature.

By *"blocked' isocyanate"* is meant the reaction product of an isocyanate in which the isocyanate functionality has been reacted with a *"blocking agent"*. Thus, a blocked isocyanate will not react until it is exposed to its deblocking temperature at which point it is deblocked.

According to preferred embodiments, the isocyanate crosslinking agent is a blocked isocyanate crosslinking agent, *i.e.* a crosslinking agent comprising a blocked isocyanate group.

The blocking agent may in particular be selected from methanol, ethanol, n-propanol, n-butanol, n-pentanol, iso-propanol, w-hydroperfluoroalcohol, 1-chloro-2-propanol, 1,3-dichloro-2-propanol, ethylene chlorohydrin, phenol, 2-methyl-2-propanol, m-cresol, o-nitrophenol, p-nitrophenol p-chlorophenol, guaiacol, resorcinol, phloroglucinol, 1-dodecanethiol, benzenethiol, ethyl acetoacetate, diethyl malonate, $\varepsilon$-caprolactam, ethyl cabamate, boric acid, and acethylacetone.

The isocyanate crosslinking agent may be chosen from tolylene diisocyanate, 4,4'-diphenylmethane isocyanate, xylene diisocyanate, hexamethylene diisocyanate, 4,4'-methylenebis(cyclohexyl isocyanate), methyl cyclohexane diisocyanate, bis(isocyanate methyl) cyclohexane, isophorone diisocyanate, dimer acid diisocyanate, lysine isocyanate, 1,5-naphthalene diisocyanate, and their combinations.

Specific examples of commercially available crosslinking agents are Vestagon® B1530, Vestagon® B1400, Vestagon® BF1320, Vestagon® BF1321, and Vestagon® BF1540.

Other additives

The powder coating composition may also comprise other additives, for example chosen among pigments, flow agents, degassing agents, waxes, flatting agents to reduce gloss, additives to improve mar resistance, surfactants, surfactants, antioxidants, ultraviolet light absorbers and stabilizers, and combinations thereof. These other additives are preferably in an amount of from 10 to 30 % by weight, preferably of from 15 to 27 % by weight, based on the total weight of the powder coating composition. These additives are the usually known by the powder coating formulators, as described in the book "Coatings Formulation" by Bodo Muller, Ulrich Poth, 2nd Revised Edition, Hanover: Vincentz Network, 2011, European Coatings Tech Files, ISBN 978-3-86630-891-6.

According to some embodiments, the powder coating composition is devoid of pigments.

According to other embodiments, the powder coating composition comprises one or more pigments so as to provide an opaque coating when applied to a substrate. These pigments may be present at an amount from 5 to 50%, and preferably from 10 to 30% by weight relative to the total weight of the resin components in the powder coating composition.

Preparation processes

In another aspect, the invention relates to a method for producing the above powder coating composition.

Such method comprises mixing the fluoropolymer resin with the polyester resin and the isocyanate crosslinking agent and optionally any other additives.

The mixing step may be a step of dry-blending the components in a powdered form.

Alternatively and preferably, the mixing step may be a step of melt-blending part or all of the components. The blend is then ground to powder after solidification. When only a part of the components is melt-blended and ground to powder, the obtained particles are dry-blended with the rest of the components in a powdered form.

In the case of melt-blending, the fluoropolymer resin and the polyester resin, preferably already blended homogeneously, may be blended with the isocyanate crosslinking agent and potentially any additives at a temperature which is lower than the temperature at which the isocyanate crosslinking agent initiates curing of the composition. In other words, the isocyanate crosslinking agent remains inactive during the melt-blending.

The melt-blending may be carried out at a temperature from 60 to 160°C, preferably of from 60 to 140°C, more preferably of from 80 to 140°C.

By *"homogeneous blend"* is meant a blend which is macroscopically homogeneous, *i.e.* in which no phase separation is visible to the naked eye.

The blender is preferably an extruder or co-kneader, more preferably a twin-screw extruder or a co-kneader.

Preferably, the blend is first formed into a solid compound such as a flake, a crumb or a pellet and the solid compound is ground to powder. Any grinding technologies may be used to perform this step, for example a grinder using hammer mill, pin mill, attrition discs or an impact classifier mill.

The method may comprise a step of selecting powder particles having the desired particle size distribution, for example by passing the powder through a sieve.

The invention also pertains to a powder coating composition produced according to the process described above.

Applications

In another aspect, the invention relates to the use of the powder coating composition.

Preferably, the powder coating composition is used for architectural powder coatings (for example for coating the exterior of buildings), or for automotive paints.

Thus, said architectural powder coatings have a high weatherability. For example, the coating may exhibit a gloss retention higher than or equal to 60 % after 4500 h when measured according to ASTM D-523-60E.

The architectural powder coatings may last for more than 10 years.

In another aspect, the invention relates to a process for coating a substrate comprising:

- applying the above powder coating composition onto the substrate;
- melting the powder coating composition.

The substrate may be wood, or a metal such as aluminum and steel grades.

The coating of the substrate may be carried out by electrostatic spraying. In such a case, the process for coating a substrate may comprise the steps of:

- electrically charging the powder coating composition;
- spraying the electrically charged powder onto the substrate;
- heating the substrate covered with the powder at a temperature higher than the melting temperature of the powder.

Melting of the powder coating composition may be performed by heating the substrate covered with the powder at a temperature higher than the melting temperature of the powder, for example at a temperature of from 160°C to 280°C preferably from 180°C to 250°C.

The process for coating a substrate comprises a step of curing the powder coating composition applied on the substrate. This step may be performed simultaneously with the step of melting the powder coating composition. The curing may be induced by heating the powder coating composition, for example at a temperature of from 160°C to 280°C preferably from 180°C to 250°C.

The invention also relates to a powder coating obtained by applying and curing at least one powder coating composition as described above.

The invention also relates to an object comprising the above powder coating.

## Examples

The following examples illustrate the invention without limiting it.

Example 1

Compounds A and B were prepared as follows:

- Compound A (comparative compound):

  - a PVDF homopolymer, with a melting point of 169°C and a melt viscosity of 6 kPo,
  - a PVDF-HFP copolymer, with a melting point of 112°C and a viscosity of 0.7 kPo,
  - a semi-crystalline polyester (polybutylene succinate) with a melting point of 110°C, a heat of fusion of 20.9 J/g, a hydroxyl value of at between 30 and 45 mg KOH/g and a melt viscosity of <1 Pa.s, ,
  - an isocyanate crosslinking agent (Vestagon B-1530, Evonik),
  - benzoin (degassing agent), and
  - a $TiO_2$ pigment (CR95, Ishihara),

  were blended at a 49.21/3.99/19.74/3.06/1.00/23.00 weight ratio and at 140°C. The molar ratio of NCO/OH=1/1.

- Compound B (according to the invention):

  - a PVDF homopolymer, with a melting point of 169°C and a melt viscosity of 6 kPo,
  - a PVDF-HFP copolymer, with a melting point of 112°C and a viscosity of 0.7 kPo,

- a semi-crystalline polyester (polybutylene succinate) with a melting point of 110°C, a heat of fusion of 20.9 J/g, a hydroxyl value of at between 30 and 45 mg KOH/g and a melt viscosity of <1 Pa.s measured by ISO 3129,
- an isocyanate crosslinking agent (Vestagon B-1530, Evonik),
- benzoin (degassing agent), and
- a $TiO_2$ pigment (CR95, Ishihara)

were blended at a 43.26/7.64/14.89/10.21/1/23 weight ratio, at 110°C. The molar ratio of NCO/OH=4.42/1.

All compounds were each ground in a high-speed blender and sieved with a 125 μm mesh. The sieved powder was electrostatically sprayed onto a chromated aluminum panel and baked at 240°C for 15 min.

Then, the coatings were assessed for the following properties:

- cross hatch adhesion, according to AAMA 2605-13 8.4.1.1;
- cross hatch adhesion with reverse impact, according to ASTM D3359-02;
- direct and reverse impact, according to AAMA 2605-13 A5.2.2;
- MEK solvent resistance, according to ASTM D4752 (200 double rub)
- weathering properties assessed by gloss retention after 4500 h of QUV test according to ASTM D3451. If the gloss retention if higher than or equal to 60 %, the coating is noted as *"pass",* if the gloss retention is lower than 60 %, the coating is noted as "*fail*";
- adhesion after boiling water, by immersing coated panels into boiling water for 5 hours then performing cross hatch adhesion test according to AAMA 2605-13 8.4.1.1.

The results are given in the following table:

| Coating from compounds No. | A | B |
|---|---|---|
| Cross hatch adhesion | 0 | 0 |
| Cross hatch adhesion with reverse impact | 0 | 0 |
| Direct impact | Pass | Pass |
| Reverse impact | Pass | Pass |
| MEK solvent resistance | Pass | Pass |
| 4500 hours QUV-B weathering | Pass | Pass |
| Adhesion after boiling water immersion for 5 h | Fail | Pass |

From the above table it is clear that the composition according to the invention offers improved adhesion properties after long term use, compared to a composition having a NCO to OH molar ratio outside of the claimed scope.

Example 2

Compound C (molar ratio of NCO/OH ratio = 1.1) is a comparative compound, and compounds D (NCO/OH ratio = 3), E (molar ratio of NCO/OH ratio = 4), F (molar ratio of NCO/OH ratio = 4) and G (molar ratio of NCO/OH ratio = 5) are compounds according to the invention.

Compounds C to G were prepared with:

- a blend made of a PVDF homopolymer, with a melting point of 169°C and a melt viscosity of 6 kPo and a semi-crystalline polyester with a melting point of 110°C, a heat of fusion of 20.9 J/g, a hydroxyl value of at between 30 and 45 mg KOH/g and a melt viscosity of <1 Pa.s;
- an isocyanate crosslinking agent (Vestagon B1530 from Evonik);
- benzoin (a degassing agent); and
- a $TiO_2$ pigment (Kronos 2160).

The weight ratio of the different components, as well as the crosslinking agent equivalent regarding to the hydroxyl value of the polyester are reported in the table below. In compound C, D, E and G, the resin hydroxyl value is about 9.5 mg KOH/g, in compound F, the hydroxyl value is 7.4 mg KOH/g.

| Compound | C | D | E | F | G |
|---|---|---|---|---|---|
| Crosslinking agent equivalent | 1.1 eq | 3eq | 4eq | 4eq | 5eq |
| Resin | 73 | 73 | 73 | 66.9 | 73 |
| Crosslinking agent | 3.3 | 9.4 | 13 | 9.4 | 16.4 |
| TiO$_2$ pigment | 22.7 | 16.6 | 16.6 | 22.7 | 9.6 |
| Degassing agent | 1 | 1 | 1 | 1 | 1 |

The resin comprises the PVDF homopolymer and the semi-crystalline polyester as reported in the table below. The weight ratio of the PVDF homopolymer and of the semi-crystalline polyester is relative to the total weight of the resin.

| | C | D | E | F | G |
|---|---|---|---|---|---|
| PVDF homopolymer | 51 | 51 | 51 | 46.8 | 51 |
| Semi-crystalline polyester | 22 | 22 | 22 | 20.1 | 22 |

All the compounds were prepared using a twin screw extruder then grounded are room temperature using an ultra-centrifugal hammer mill and sieved with a 120 μm mesh to obtain a powder having a Dv50 of 35 μm. The sieved powder was then electrostatically sprayed onto non-chromated aluminum panels type 5005 and 6060, according to Qualicoat class 3 and AAMA 2605-13, and were then baked at 220°C for 15 min. The formed coatings had a thickness between 80 and 100 μm.

According to Qualicoat 3, the coatings were assessed for the following properties:

- cross hatch adhesion on a AL 5005 panel, according to AAMA 2605-13 8.4.1.1 and ISO 2409 (Qualicoat Class 3 2.4.1). Results are progressive from 0 (complete adhesion) to 5 were all the coating is removed during the test;
- adhesion after boiling water, by immersing coated panels into boiling water for 5 hours then performing cross hatch adhesion test according to AAMA 2605-13 8.4.1.1 and ISO 2409 (Qualicoat Class 3 2.16).
- adhesion after mechanical deformation, following the bend test using a conical mandrel, according to ISO 1519 (Qualicoat Class 3 2.7);
- weathering properties assessed by gloss retention after 4500 h of QUV test according to ASTM D3451. If the gloss retention if higher than or equal to 60 %, the coating is noted as *"pass",* if the gloss retention is lower than 60 %, the coating is noted as "*fail*"*;*

The results are given in the following table:

| Coating from compounds No. | C | D | E | F | G |
|---|---|---|---|---|---|
| **Cross hatch adhesion** | 0 | 0 | 0 | 0 | 0 |
| **Bend test** | 98 % | 100 % | 100 % | 100 % | 100 % |
| **4500 hours QUV-B weathering** | pass | pass | pass | pass | pass |
| **Adhesion after boiling water immersion for 5 hours** | fail | pass | pass | pass | pass |

From the above table it is clear that the composition according to the invention offers improved adhesion properties after long term use, compared to a composition having a NCO to OH molar ratio outside of the claimed scope.

**Claims**

1. A powder coating composition comprising:

  a) at least one fluoropolymer resin;
  b) at least one polyester resin; and

c) an isocyanate crosslinking agent;

wherein the molar ratio of isocyanate groups of the isocyanate crosslinking agent to hydroxyl groups of the polyester resin in the composition is from 2.5 to 5.

2. The powder coating composition according to claim 1, wherein the polyester resin is a semi-crystalline polyester resin preferably having a linear aliphatic or/and cycloaliphatic structure.

3. The powder coating composition according to any one of claims 1 or 2, wherein the molar ratio of isocyanate groups of the isocyanate crosslinking agent to hydroxyl groups of the polyester resin in the composition is from 2.5 to 4.8, and preferably from 2.8 to 4.5.

4. The powder coating composition according to any one of claims 1 to 3, wherein the isocyanate crosslinking agent is chosen from a blocked isocyanate crosslinking agent and a non-blocked isocyanate crosslinking agent.

5. The powder coating composition according to any one of claims 1 to 4, wherein the isocyanate crosslinking agent is present at an amount from 1 to 20 % relative to the total weight of the resin components in the powder coating composition, and/or wherein the fluoropolymer resin is present at an amount from 5 to 90 % relative to the total weight of the resin components in the powder coating composition, and/or wherein the polyester resin is present at an amount from 5 to 90 % relative to the total weight of the resin components in the powder coating composition.

6. The powder coating composition according to any one of claims 1 to 5, wherein the polyester resin is a semi-crystalline polyester resin and wherein the semi-crystalline polyester resin comprises, and preferably consists of, units derived from:

- at least a poly-carboxylic acid chosen among a linear aliphatic dicarboxylic acid and/or a cycloaliphatic dicarboxylic acid, and
- at least a polyol chosen among a linear aliphatic diol and/or a cycloaliphatic diol,

wherein the poly-carboxylic acid is preferably chosen among a linear aliphatic $C_4$-$C_8$ dicarboxylic acid, preferably a linear aliphatic $C_4$-$C_6$ dicarboxylic acid, and/or a cycloaliphatic dicarboxylic acid, and is more preferably chosen among adipic acid, succinic acid, 1,5-pentanedioic acid, 1,4-cyclohexanedicarboxylic acid and a combination thereof; and the polyol is preferably chosen among a linear aliphatic $C_2$-$C_8$ diol, preferably a linear aliphatic $C_2$-$C_6$ diol, more preferably a linear aliphatic $C_4$-$C_6$ diol, and/or a cycloaliphatic diol, and is more preferably chosen among 1,6-hexanediol, 1,4-butanediol, 1,4-cyclohexanedimethanol and a combination thereof.

7. The powder coating composition of claim 1 or 6, wherein the polyester resin is a semi-crystalline polyester resin and wherein the melting temperature of the semi-crystalline polyester resin is from 75 to 150°C, preferably from 90 to 130°C.

8. The powder coating composition of any one of claims 1 to 7, wherein the fluoropolymer resin is chosen among polyvinylidene fluoride homopolymers and poly(vinylidene fluoride-hexafluoropropylene) copolymers.

9. The powder coating composition of any one of claims 1 to 8, wherein the isocyanate crosslinking agent is chosen from tolylene diisocyanate, 4,4'-diphenylmethane isocyanate, xylene diisocyanate, hexamethylene diisocyanate, 4,4'-methylenebis(cyclohexyl isocyanate), methyl cyclohexane diisocyanate, bis(isocyanate methyl) cyclohexane isophorone diisocyanate, dimer acid diisocyanate, lysine isocyanate, 1,5-naphthalene diisocyanate, and their combinations.

10. The powder coating composition of any one of claims 1 to 9, having a particle volume median diameter Dv50 of from 10 to 250 $\mu$m, preferably from 30 to 150 $\mu$m, as determined by laser diffraction analysis.

11. A powder coating composition according to any one of claims 1 to 10, further comprising other additives chosen among pigments, flow agents, degassing agents, waxes and combinations thereof.

12. A method for producing the powder coating composition of any one of claims 1 to 11, comprising mixing a blend comprising the fluoropolymer resin and the polyester resin with the isocyanate crosslinking agent.

**13.** The method of claim 12, wherein the mixing is carried out by blending in a blender, preferably in an extruder, the blend comprising the fluoropolymer resin and the polyester resin with the isocyanate crosslinking agent to form a melt blend, and wherein the method optionally comprises converting the melt blend into flakes, into pellets, into crumbs or into a powder after cooling.

**14.** Use of the powder coating composition of any one of claims 1 to 11, for architectural powder coating.

**15.** A powder coating obtained by applying and curing the powder coating composition of any one of claims 1 to 11.

Europäisches
Patentamt

European
Patent Office

Office européen
des brevets

# EUROPEAN SEARCH REPORT

**Application Number**

**EP 21 30 6031**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/072151 A1 (SAITO SHUN [JP] ET AL) 12 March 2015 (2015-03-12) * paragraphs [0088], [0093], [0095], [0098]; claims 1-12; tables 2-3 * ----- | 1-15 | INV. C08G18/42 C08G18/62 C08L75/04 C08L75/06 |
| X | US 2017/247563 A1 (SAITO SHUN [JP] ET AL) 31 August 2017 (2017-08-31) * paragraphs [0157], [0171] - [0172], [0174], [0220] - [0221], [0239] - [0241], [0249]; claims 8-13 * ----- | 1-15 | C09D175/04 C09D175/06 |

**TECHNICAL FIELDS SEARCHED (IPC)**

C08G
C08L
C09D

The present search report has been drawn up for all claims

| Place of search | Date of completion of the search | Examiner |
|---|---|---|
| Munich | 8 January 2022 | Scheuer, Sylvie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6031

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2022

| Patent document cited in search report | | | Publication date | Patent family member(s) | | | Publication date |
|---|---|---|---|---|---|---|---|
| US 2015072151 | A1 | | 12-03-2015 | CN | 104334660 | A | 04-02-2015 |
| | | | | CN | 106867331 | A | 20-06-2017 |
| | | | | EP | 2868724 | A1 | 06-05-2015 |
| | | | | EP | 3722384 | A1 | 14-10-2020 |
| | | | | JP | 6431765 | B2 | 28-11-2018 |
| | | | | JP | 6597806 | B2 | 30-10-2019 |
| | | | | JP | 2018087342 | A | 07-06-2018 |
| | | | | JP | WO2014002964 | A1 | 02-06-2016 |
| | | | | SG | 11201408656W | A | 30-03-2015 |
| | | | | TW | 201410809 | A | 16-03-2014 |
| | | | | US | 2015072151 | A1 | 12-03-2015 |
| | | | | US | 2017275491 | A1 | 28-09-2017 |
| | | | | WO | 2014002964 | A1 | 03-01-2014 |
| US 2017247563 | A1 | | 31-08-2017 | CN | 107109097 | A | 29-08-2017 |
| | | | | JP | 6631533 | B2 | 15-01-2020 |
| | | | | JP | WO2016080220 | A1 | 31-08-2017 |
| | | | | US | 2017247563 | A1 | 31-08-2017 |
| | | | | WO | 2016080220 | A1 | 26-05-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3670570 A
- EP 2868724 A
- WO 2016002725 A
- JP 5419828 B

**Non-patent literature cited in the description**

- Encyclopedia of Polymer Science and Engineering. Wiley Interscience, 1986, vol. 4, 482-519
- **BODO MULLER ; ULRICH POTH.** Coatings Formulation. Vincentz Network, 2011